# EUROPEAN PATENT APPLICATION

(11) **EP 4 678 951 A1**
(43) Date of publication of application: **14.01.2026**
(21) Application number: 23926442.7
(22) Date of filing: 01.12.2023
(51) Int. Cl.: F16J 15/24, F16J 15/18, F16J 15/3212, F16J 15/3232

(54) **SEALING STRUCTURE**

(30) Priority: 07.03.2023 JP 2023034795
(71) Applicant: Pillar Corporation, Osaka-shi, Osaka 550-0013 (JP)
(72) Inventor: HINA, Jun, Osaka-shi, Osaka 550-0013 (JP); YAMASHITA, Tatsuyoshi, Osaka-shi, Osaka 550-0013 (JP); KAMON, Yusuke, Osaka-shi, Osaka 550-0013 (JP)
(74) Representative: Meissner Bolte Partnerschaft mbB
(86) International application number: PCT/JP2023/043149
(87) International publication number: WO 2024/185237

(57) **Abstract**

A seal structure (10) for sealing between a circumferential surface (2d) of a seal box (2) and an outer circumferential surface (50a) of a rotary shaft (50) that face each other includes: an annular first seal member (12) provided on a radially outer side of the outer circumferential surface (50a), having an annular groove (12a) that is open on one side in an axial direction, and made of a synthetic resin; a shrinkage suppression part (13) engaged with the annular groove (12a) of the first seal member (12) and configured to suppress shrinkage of the first seal member (12) in a radial direction at a low temperature; and an annular second seal member (14) interposed between the first seal member (12) and the outer circumferential surface (50a) and made of a material that has a lower shrinkage rate at a low temperature than the first seal member (12) and easily fits closely to the first seal member (12).

## Description

### TECHNICAL FIELD

The present invention relates to a seal structure.

### BACKGROUND ART

As a seal structure installed in a fluid device such as a valve or a pump, for example, a gland packing described in PATENT LITERATURE 1 is known. This gland packing is formed into an annular shape using expanded graphite and is provided in a seal box (stuffing box) that surrounds a shaft (stem) of a fluid device. The gland packing is compressed in the axial direction in the seal box, thereby deforming so as to extend in the radial direction. Due to this deformation, the outer circumferential surface and the inner circumferential surface of the gland packing are brought into close contact with the inner circumferential surface of the seal box and the outer circumferential surface of the shaft, respectively. Accordingly, the gland packing <inhibits a sealing target fluid in the fluid device from leaking to the atmosphere side.

### CITATION LIST

### PATENT LITERATURE

| | |
|---|---|
| PATENT LITERATURE 1: | Japanese Laid-Open Patent Publication JP 2012 -246 973 A |

### SUMMARY OF THE INVENTION

### TECHNICAL PROBLEM

The above gland packing made of expanded graphite has a relatively low shrinkage rate at a low temperature and thus is suitable for use in low-temperature environments. However, the sliding surface (inner circumferential surface), against the shaft, of the gland packing made of expanded graphite is likely to wear, so that contamination in which the wear debris is mixed into the sealing target fluid as foreign matter, is likely to occur. Therefore, the use of the gland packing made of expanded graphite is not suitable in an environment where strict prevention of contamination is required.

In order to prevent contamination, it is conceivable to use a seal ring made of a synthetic resin, which is less likely to wear than expanded graphite. However, the seal ring made of a synthetic resin has a relatively high shrinkage rate at a low temperature, and thus when the seal ring is used in a low-temperature environment, the seal ring shrinks, thereby causing a gap to form between the outer circumferential surface thereof and the inner circumferential surface of a packing box, and the sealing performance thereof decreases.

The present invention has been made in view of such circumstances, and an object of the present invention is to provide a seal structure that can improve sealing performance in a low-temperature environment while suppressing contamination.

### SOLUTION TO THE PROBLEM

Adspect (1) The present invention is directed to a seal structure for sealing between an inner sealing target surface and an outer sealing target surface facing each other in a radial direction, the seal structure including: an annular first seal member provided on a radially outer side of the inner sealing target surface, having an annular groove that is open on one side in an axial direction, and made of a synthetic resin; a shrinkage suppression part engaged with the annular groove of the first seal member and configured to suppress shrinkage of the first seal member in the radial direction at a low temperature; and an annular second seal member interposed between the first seal member and the outer sealing target surface and made of a material that has a lower shrinkage rate at a low temperature than the first seal member and easily fits closely to the first seal member.

In the seal structure of the present invention, since the first seal member made of a synthetic resin is provided on the radially outer side of the inner sealing target surface, the sliding surface (inner circumferential surface), against the inner sealing target surface, of the first seal member is less likely to wear. Accordingly, even when the seal structure is used in a fluid device, contamination into a sealing target fluid in the fluid device can be suppressed.

In addition, the shrinkage suppression part suppresses shrinkage of the first seal member in the radial direction at a low temperature, and the second seal member, which has a lower shrinkage rate at a low temperature than the first seal member, is interposed between the first seal member and the outer sealing target surface. Therefore, even when the seal structure is used in a low-temperature environment, the first seal member and the second seal member can be inhibited from shrinking in the radial direction. Furthermore, since the second seal member is made of a material that easily fits closely to the first seal member, the inner circumferential surface of the second seal member can be brought into close contact with the outer circumferential surface of the first seal member. Accordingly, the sealing performance of the seal structure in a low-temperature environment can also be improved.

Aspect (2): In the seal structure of aspect (1) above, preferably, the shrinkage suppression part is composed of an O-ring that is fitted into the annular groove and is made of a metal.

In this case, the seal structure can be configured to be compact in the axial direction, so that the seal structure can be provided even when the space between the inner sealing target surface and the outer sealing target surface is narrow in the axial direction.

Aspect (3): In the seal structure of aspect (1) or (2) above, preferably, the second seal member is made of expanded graphite, an expanded graphite yarn, or an expanded graphite packing.

In this case, the shrinkage rate at a low temperature of the second seal member can be effectively reduced and the second seal member has excellent close fitting to the first seal member made of a synthetic resin. Accordingly, it is possible to effectively improve sealing performance in a low-temperature environment while effectively suppressing contamination.

Aspect (4): In the seal structure of any one of aspects (1) to (3) above, preferably, a plurality of seal units each composed of a set of the first seal member, the second seal member, and the shrinkage suppression part are provided in the axial direction between the inner sealing target surface and the outer sealing target surface, and the seal structure further includes a spacer interposed between the second seal members of the seal units adjacent to each other in the axial direction.

In this case, when the plurality of seal units are pressed in the axial direction and the second seal member of each seal unit is brought into close contact with the first seal member and the outer sealing target surface, each second seal member is compressed in the axial direction by the spacer adjacent to the second seal member. As a result, the second seal members of the plurality of seal units can be evenly compressed in the axial direction.

### ADVANTAGEOUS EFFECTS OF THE INVENTION

With the seal structure of the present invention, it is possible to improve sealing performance in a low-temperature environment while suppressing contamination.

### BRIEF DESCRIPTION OF DRAWINGS

FIG. 1 is a cross-sectional view showing a shaft sealing device including a seal structure according to a first embodiment.
FIG. 2 is a cross-sectional view showing a state before a plurality of second seal members are compressed in an axial direction by a tightening mechanism.
FIG. 3 is an enlarged cross-sectional view of a seal unit shown in FIG. 2.
FIG. 4 is a cross-sectional view showing a shaft sealing device including a seal structure according to a second embodiment.
FIG. 5 is a cross-sectional view showing a shaft sealing device including a seal structure according to a third embodiment.

### DETAILED DESCRIPTION

Next, preferred embodiments of the present invention will be described with reference to the accompanying drawings.

### First Embodiment

### Shaft Sealing Device

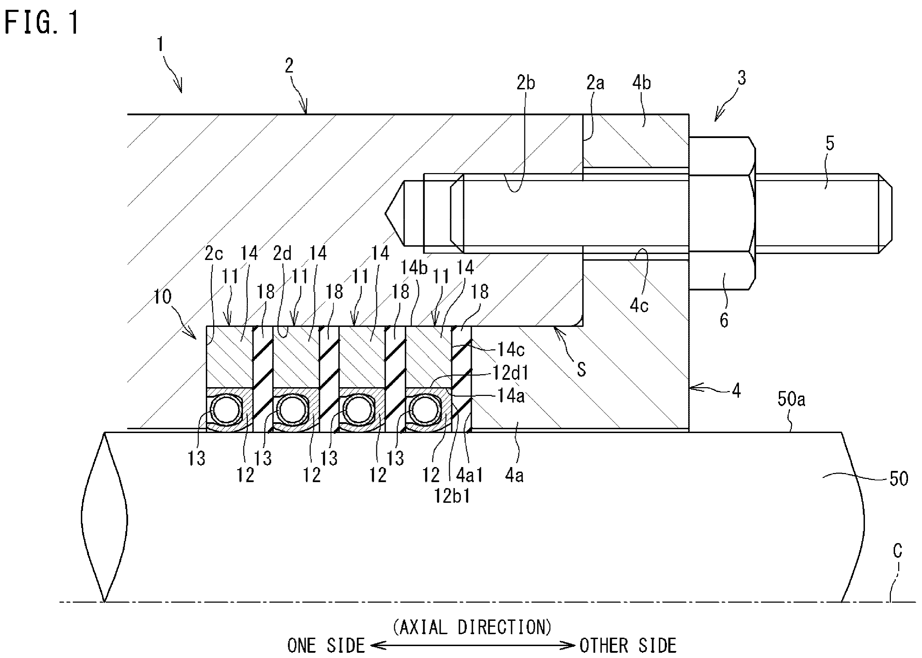

FIG. 1 is a cross-sectional view showing a shaft sealing device 1 including a seal structure 10 according to a first embodiment. The shaft sealing device 1 is provided in a fluid device such as a pump, a valve, or a dresser joint, for example, and is used for inhibiting a sealing target fluid in the fluid device from leaking to the outside. The fluid device includes a rotary shaft 50 that rotates around an axis C thereof and reciprocates in the direction of the axis C. In the fluid device of the present embodiment, the axis C of the rotary shaft 50 is arranged in the horizontal direction, but the axis C may be arranged in the vertical direction.

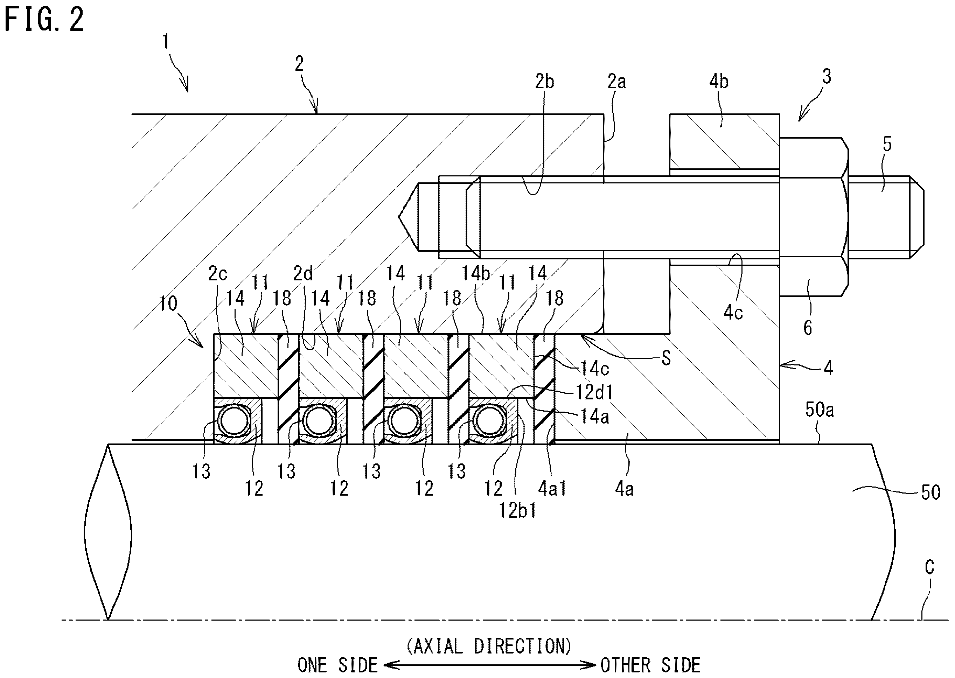

Hereinafter, in this specification, a direction along the axis C is referred to as "axial direction", a direction orthogonal to the axis C is referred to as "radial direction", and a direction around the axis C is referred to as "circumferential direction". For convenience, the left side of FIG. 1 is referred to as one side in the axial direction, and the right side of FIG. 1 is referred to as another side in the axial direction (the same applies to FIG. 2 to FIG. 5).

The shaft sealing device 1 includes a seal box 2, a tightening mechanism 3, and the seal structure 10. The seal box 2 surrounds the rotary shaft 50. On an end surface 2a on the other side in the axial direction of the seal box 2, a plurality of screw holes 2b (only one is shown in FIG. 1) are formed at intervals in the circumferential direction. On the inner circumference of the seal box 2, an annular step surface 2c that extends in the radial direction and a circumferential surface 2d that extends from the outer circumference end of the step surface 2c to the end surface 2a, are formed. The circumferential surface 2d faces an outer circumferential surface 50a of the rotary shaft 50 in the radial direction. An annular space S is formed between the circumferential surface 2d of the seal box 2 and the outer circumferential surface 50a of the rotary shaft 50.

The seal structure 10 is placed in the annular space S and seals between the circumferential surface (outer sealing target surface) 2d of the seal box 2 and the outer circumferential surface (inner sealing target surface) 50a of the rotary shaft 50. The seal structure 10 of the present embodiment includes a plurality of seal units 11 and a plurality of spacers 18. The number of seal units 11 and the number of spacers 18 are the same (four in FIG. 1). Each of the number of seal units 11 and the number of spacers 18 is not limited to the present embodiment, and it is sufficient that these numbers are each two or more.

The plurality of seal units 11 and the plurality of spacers 18 are arranged alternately adjacent to each other in the axial direction in the annular space S. Each seal unit 11 is configured as a set of a first seal member 12, a shrinkage suppression part 13, and a second seal member 14. Each seal unit 11 and each spacer 18 will be described in detail later.

The tightening mechanism 3 is a mechanism that presses the plurality of seal units 11 and the plurality of spacers 18 toward the one side in the axial direction and compresses the second seal member 14 of each seal unit 11 in the axial direction. FIG. 2 is a cross-sectional view showing a state before the plurality of second seal members 14 are compressed in the axial direction by the tightening mechanism 3. In FIG. 1 and FIG. 2, the tightening mechanism 3 has a pressing member 4, a screw shaft 5, and a nut 6.

The pressing member 4 has a cylindrical portion 4a that is provided on the radially outer side of the rotary shaft 50, and an annular flange portion 4b. The cylindrical portion 4a is movable in the axial direction with respect to the seal box 2 and the rotary shaft 50. An end portion on the one side in the axial direction of the cylindrical portion 4a is inserted into the annular space S.

The flange portion 4b extends radially outward from an end portion on the other side in the axial direction of the cylindrical portion 4a. In the flange portion 4b, through holes 4c whose number is the same as that of the screw holes 2b of the seal box 2 are formed at intervals in the circumferential direction. The through holes 4c are formed so as to penetrate the flange portion 4b in the thickness direction of the flange portion 4b (in the axial direction).

The screw shaft 5 penetrates each through hole 4c of the pressing member 4 and is tightened into and fixed to each screw hole 2b of the seal box 2. Accordingly, one end portion of each of screw shafts 5 whose number is the same as that of the screw holes 2b of the seal box 2 is fixed on the end surface 2a side of the seal box 2. Another end portion of each screw shaft 5 protrudes on the other side in the axial direction with respect to the pressing member 4. Each screw shaft 5 has a function to guide the movement of the pressing member 4 in the axial direction. The nut 6 is tightened onto the other end portion of each screw shaft 5. When the nut 6 is tightened onto each screw shaft 5, the pressing member 4 moves toward the one side in the axial direction, and an end surface 4a1 on the one side in the axial direction of the cylindrical portion 4a presses the plurality of seal units 11 and the plurality of spacers 18 toward the one side in the axial direction. As a result, the second seal member 14 of each seal unit 11 is compressed in the axial direction.

### Seal Units

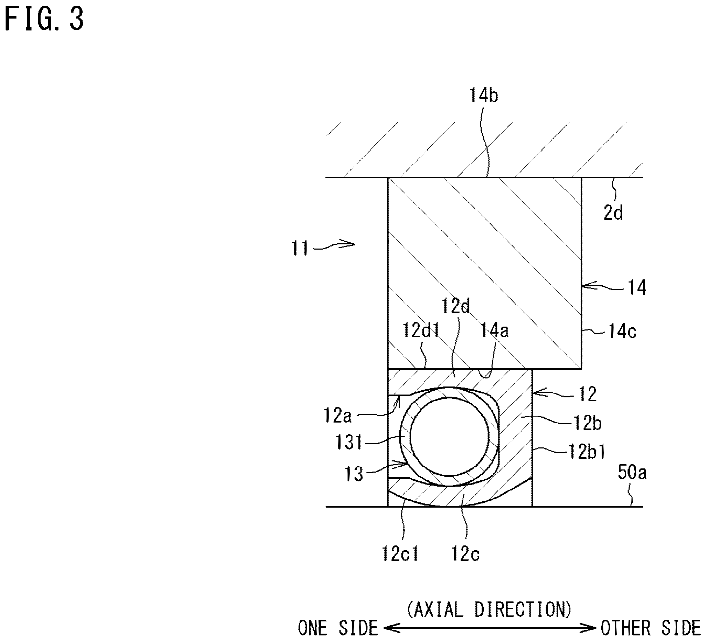

FIG. 3 is an enlarged cross-sectional view of the seal unit 11 shown in FIG. 2. In FIG. 2 and FIG. 3, the first seal member 12 of each seal unit 11 is composed of an annular member made of a synthetic resin. Examples of the synthetic resin include polytetrafluoroethylene (PTFE), polychlorotrifluoroethylene (PCTFE), ultra-high-molecular-weight polyethylene (UHMW-PE), etc. The first seal member 12 of the present embodiment is made of polytetrafluoroethylene. The first seal member 12 is provided on the radially outer side of the outer circumferential surface 50a of the rotary shaft 50 in the annular space S.

The first seal member 12 has an annular groove 12a that is open on the one side in the axial direction and has a concave cross-section. The first seal member 12 also has a circular ring portion 12b that is formed on the other side in the axial direction of the annular groove 12a, an inner tube portion 12c that is formed on the radially inner side of the annular groove 12a, and an outer tube portion 12d that is formed on the radially outer side of the annular groove 12a.

The thickness in the axial direction of the circular ring portion 12b is shorter than the depth in the axial direction of the annular groove 12a. The inner tube portion 12c extends from the radially inner end of the circular ring portion 12b toward the one side in the axial direction. The thickness in the radial direction of the inner tube portion 12c is shorter than the width in the radial direction of the annular groove 12a. The inner tube portion 12c of the present embodiment is formed in substantially an arc shape so as to protrude radially inward in a cross-sectional view. A center portion in the axial direction of an inner circumferential surface 12c1 of the inner tube portion 12c is in contact with the outer circumferential surface 50a of the rotary shaft 50. The inner tube portion 12c may be formed so as to extend straight in the axial direction in a cross-sectional view, and the entire inner circumferential surface 12c1 may be in contact with the outer circumferential surface 50a of the rotary shaft 50.

The outer tube portion 12d extends from the radially outer end of the circular ring portion 12b toward the one side in the axial direction. The outer tube portion 12d of the present embodiment extends straight in the axial direction in a cross-sectional view. The thickness in the radial direction of the outer tube portion 12d is shorter than the width of the annular groove 12a.

The shrinkage suppression part 13 suppresses shrinkage of the first seal member 12 in the radial direction at a low temperature (particularly at an extremely low temperature). The shrinkage suppression part 13 of the present embodiment is composed of an O-ring 131 made of a metal and having a lower shrinkage rate than the first seal member 12 made of a synthetic resin. The O-ring 131 is formed in a hollow annular shape in a cross-sectional view.

The O-ring 131 is engaged with the annular groove 12a of the first seal member 12 by the entirety thereof being fitted into the annular groove 12a. In a state of being fitted into the annular groove 12a, the O-ring 131 presses the inner tube portion 12c and the outer tube portion 12d of the first seal member 12 toward the radially inner side and the radially outer side, respectively. In addition, the inner tube portion 12c and the outer tube portion 12d are also pressed toward the radially inner side and the radially outer side, respectively, by the pressure of the sealing target fluid flowing into the annular groove 12a from the one side in the axial direction.

By the inner tube portion 12c being pressed toward the radially inner side, the inner circumferential surface 12c1 of the first seal member 12 is brought into close contact with the outer circumferential surface 50a of the rotary shaft 50, whereby the first seal member 12 can inhibit the sealing target fluid from leaking from the radially inner side of the annular space S (rotary shaft 50 side) to the outside. In addition, by the outer tube portion 12d being pressed toward the radially outer side, the outer tube portion 12d of the first seal member 12 can be inhibited from shrinking radially inward at a low temperature.

Each second seal member 14 is an annular member that is interposed between the first seal member 12 and the circumferential surface 2d of the seal box 2. The second seal member 14 is made of a material that has a lower shrinkage rate at a low temperature than the first seal member 12 and easily fits closely to the first seal member 12. Examples of such a material include expanded graphite, an expanded graphite yarn that is a knitted yarn made of expanded graphite, an expanded graphite packing (e.g., a gland packing made by braiding a plurality of expanded graphite yarns), etc. The second seal member 14 of the present embodiment is made of expanded graphite.

The second seal member 14 is formed to have a quadrangular cross-section. The thickness in the radial direction of the second seal member 14 is larger than the thickness in the radial direction of the first seal member 12. In a state before the tightening mechanism 3 compresses each second seal member 14 in the axial direction (see FIG. 2), the width in the axial direction of the second seal member 14 is larger than the width in the axial direction of the first seal member 12.

As shown in FIG. 1, when the tightening mechanism 3 compresses each second seal member 14 in the axial direction, an outer circumferential surface 14b of the second seal member 14 comes into close contact with the circumferential surface 2d of the seal box 2. Accordingly, the second seal member 14 inhibits the sealing target fluid from leaking from the radially outer side of the annular space S (seal box 2 side) to the outside. In addition, since the shrinkage rate of the second seal member 14 at a low temperature is low, even when the second seal member 14 shrinks in the radial direction at a low temperature, the second seal member 14 can maintain sealing performance with the circumferential surface 2d.

In addition, when the tightening mechanism 3 compresses each second seal member 14 in the axial direction, an inner circumferential surface 14a of the second seal member 14 fits closely to and comes into close contact with an outer circumferential surface 12d1 of the outer tube portion 12d of the first seal member 12. Accordingly, the second seal member 14 also inhibits the sealing target fluid from leaking from between the first seal member 12 and the second seal member 14 in the annular space S to the outside.

Furthermore, each second seal member 14 tries to extend toward both sides in the radial direction by being compressed in the axial direction by the tightening mechanism 3. Therefore, even if the outer circumferential surface 12d1 of the first seal member 12 shrinks radially inward at a low temperature, the second seal member 14 extends radially inward, while being in close contact with the outer circumferential surface 12d1 of the first seal member 12, following this shrinkage. Therefore, even if the first seal member 12 shrinks at a low temperature, the sealing performance between the first seal member 12 and the second seal member 14 can be maintained.

### Spacers

In FIG. 1 and FIG. 2, each spacer 18 is composed of an annular plate member made of a metal. The spacers 18 are arranged adjacent to the other side in the axial direction of the second seal members 14 of the respective seal units 11 in the state shown in FIG. 2. Accordingly, the spacer 18 is interposed between the second seal members 14 of the seal units 11 adjacent to each other in the axial direction. In addition, the spacer 18 is also interposed between the pressing member 4 (cylindrical portion 4a) and the second seal member 14 placed furthest on the other side in the axial direction.

The outer diameter of each spacer 18 is substantially the same as the outer diameter of each second seal member 14. The inner diameter of each spacer 18 is equal to or smaller than the inner diameter of each second seal member 14 and equal to or larger than the outer diameter of the rotary shaft 50. The inner diameter of each spacer 18 of the present embodiment is substantially the same as the inner diameter of each first seal member 12.

When the nut 6 of the tightening mechanism 3 is tightened from the state shown in FIG. 2 and the pressing member 4 moves toward the one side in the axial direction, each spacer 18 presses the entirety of a side surface 14c on the other side in the axial direction of the second seal member 14 adjacent to the one side in the axial direction of the spacer 18, toward the one side in the axial direction. Then, in a state where the tightening of the nut 6 is completed as shown in FIG. 1, a radially inner portion of each spacer 18 comes into contact with a side surface 12b1 on the other side in the axial direction of the circular ring portion 12b of the first seal member 12.

### Advantageous Effects

In the seal structure 10 of the present embodiment, since each first seal member 12 made of a synthetic resin is provided on the radially outer side of the outer circumferential surface 50a of the rotary shaft 50, the sliding surface (inner circumferential surface 12c1), against the outer circumferential surface 50a of the rotary shaft 50, of the first seal member 12 is less likely to wear. Accordingly, contamination into the sealing target fluid in the fluid device can be suppressed.

In addition, each shrinkage suppression part 13 suppresses shrinkage of the first seal member 12 in the radial direction at a low temperature, and the second seal member 14, which has a lower shrinkage rate at a low temperature than the first seal member 12, is interposed between the outer circumferential surface 12d1 of each first seal member 12 and the circumferential surface 2d of the seal box 2. Therefore, even when the seal structure 10 is used in a low-temperature environment (in particular, in an extremely low-temperature environment), each first seal member 12 and each second seal member 14 can be inhibited from shrinking in the radial direction. Furthermore, since each second seal member 14 is made of a material that easily fits closely to the first seal member 12, the inner circumferential surface 14a of the second seal member 14 can be brought into close contact with the outer circumferential surface 12d1 of the first seal member 12. Accordingly, the sealing performance of the seal structure 10 in a low-temperature environment can also be improved.

In addition, each shrinkage suppression part 13 is composed of the O-ring 131 that is fitted into the annular groove 12a of the first seal member 12 and is made of a metal. Accordingly, the seal structure 10 can be configured to be compact in the axial direction, so that the seal structure 10 can be provided even when the space between the outer circumferential surface 50a of the rotary shaft 50 and the circumferential surface 2d of the seal box 2 is narrow in the axial direction.

In addition, since each second seal member 14 is made of expanded graphite, the shrinkage rate at a low temperature of the second seal member 14 can be effectively reduced and the second seal member 14 has excellent close fitting to the first seal member 12 made of a synthetic resin. Accordingly, it is possible to effectively improve sealing performance in a low-temperature environment while effectively suppressing contamination.

In addition, the spacer 18 is interposed between the second seal members 14 of the seal units 11 adjacent to each other in the axial direction. Accordingly, when the plurality of seal units 11 are pressed from the other side in the axial direction and the second seal member 14 of each seal unit 11 is brought into close contact with the outer circumferential surface 12d1 of the first seal member 12 and the circumferential surface 2d of the seal box 2, each second seal member 14 is compressed in the axial direction by the spacer 18 adjacent to the second seal member 14. As a result, the second seal members 14 of the plurality of seal units 11 can be evenly compressed in the axial direction.

### Second Embodiment

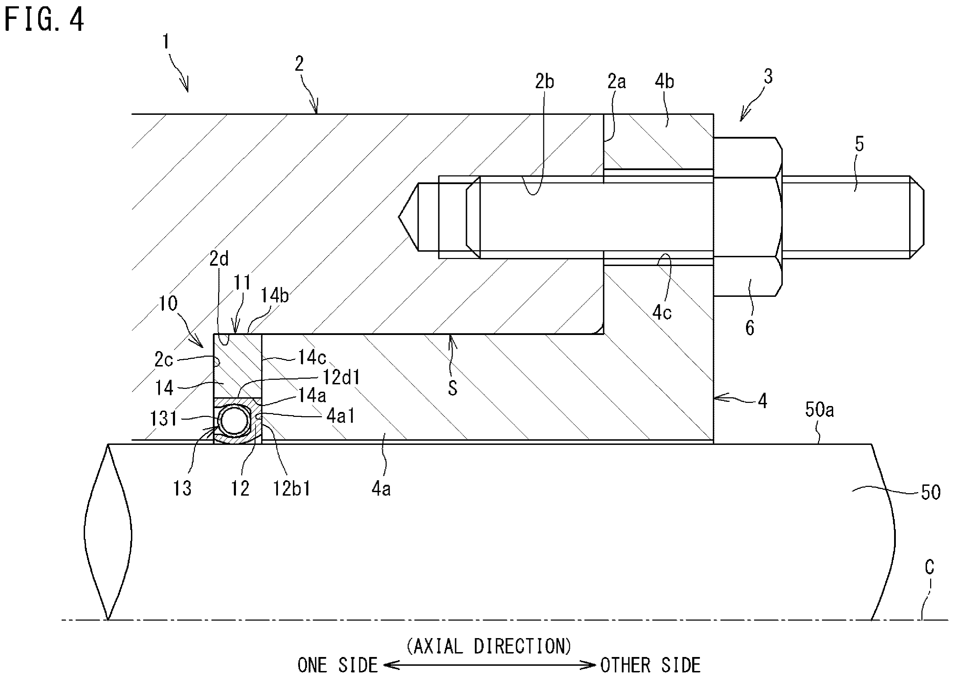

FIG. 4 is a cross-sectional view showing a shaft sealing device 1 including a seal structure 10 according to a second embodiment. In FIG. 4, the seal structure 10 of the present embodiment is composed only of a single seal unit 11. The second seal member 14 of the seal unit 11 is directly pressed by the cylindrical portion 4a of the pressing member 4 of the tightening mechanism 3. The other components of the present embodiment are the same as those of the first embodiment, and thus are designated by the same reference signs, and the description thereof is omitted.

In the seal structure 10 of the present embodiment as well, since the first seal member 12 made of a synthetic resin is provided on the radially outer side of the outer circumferential surface 50a of the rotary shaft 50, the sliding surface (inner circumferential surface 12c1), against the outer circumferential surface 50a of the rotary shaft 50, of the first seal member 12 is less likely to wear. Accordingly, contamination into the sealing target fluid in the fluid device can be suppressed. In addition, even when the seal structure 10 is used in a low-temperature environment (in particular, in an extremely low-temperature environment), the first seal member 12 and the second seal member 14 can be inhibited from shrinking in the radial direction. Furthermore, the inner circumferential surface 14a of the second seal member 14 can be brought into close contact with the outer circumferential surface 12d1 of the first seal member 12. Accordingly, the sealing performance of the seal structure 10 in a low-temperature environment can also be improved. In addition, since the seal structure 10 is composed only of the single seal unit 11, the seal structure 10 can be configured to be further compact in the axial direction.

### Third Embodiment

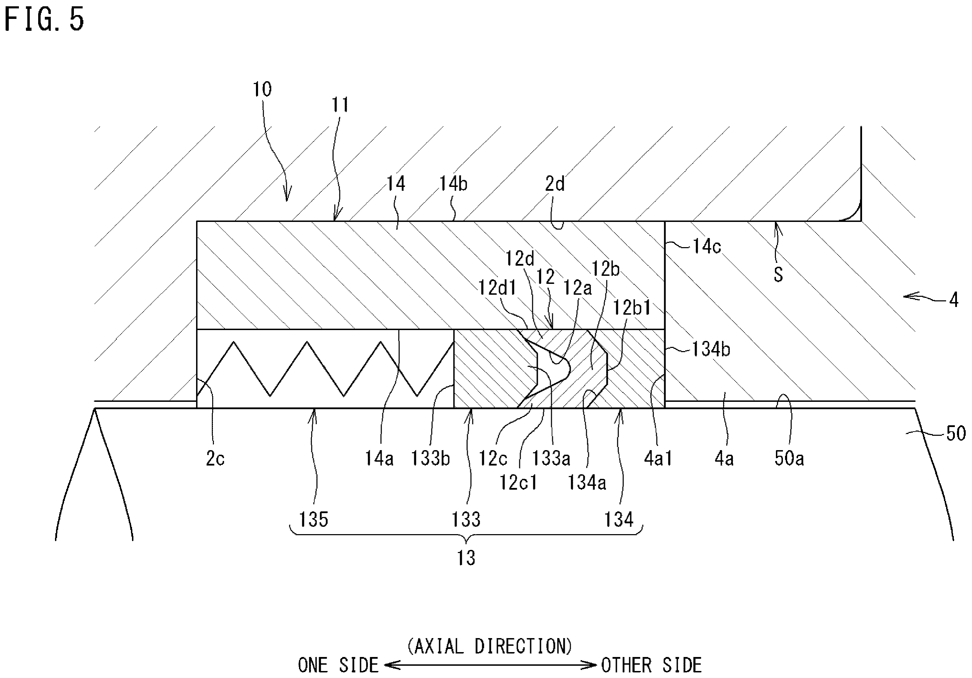

FIG. 5 is a cross-sectional view showing a shaft sealing device 1 including a seal structure 10 according to a third embodiment. The seal structure 10 of the present embodiment is a modification of the second embodiment. In FIG. 5, the seal structure 10 of the present embodiment is different from the second embodiment in the respective shapes of the first seal member 12 and the second seal member 14 and the configuration of the shrinkage suppression part 13.

The first seal member 12 of the present embodiment is composed of a V-ring, and, as in the second embodiment, has an annular groove 12a, a circular ring portion 12b, an inner tube portion 12c, and an outer tube portion 12d. The annular groove 12a is formed to have a V-shaped cross-section. The side surface 12b1 on the other side in the axial direction of the circular ring portion 12b is formed such that a center portion in the radial direction thereof protrudes toward the other side in the axial direction. The second seal member 14 is formed to be longer in the axial direction than in the second embodiment, and is placed between the step surface 2c of the seal box 2 and the end surface 4a1 of the pressing member 4.

The shrinkage suppression part 13 is composed of a first adapter ring 133, a second adapter ring 134, and an elastic member 135. The first adapter ring 133 and the second adapter ring 134 are each composed of an annular member made of a metal. The first adapter ring 133 and the second adapter ring 134 are placed adjacent to the one side in the axial direction and the other side in the axial direction of the first seal member 12, respectively, on the radially outer side with respect to the second seal member 14.

The first adapter ring 133 has an annular engagement portion 133a that protrudes toward the other side in the axial direction. The engagement portion 133a is engaged with the annular groove 12a of the first seal member 12. The engagement portion 133a is formed such that, by moving toward the other side in the axial direction with respect to the annular groove 12a, the engagement portion 133a pushes and widens the inner tube portion 12c and the outer tube portion 12d of the first seal member 12 toward the radially inner side and the radially outer side, respectively. A side surface 133b on the one side in the axial direction of the first adapter ring 133 is formed flat over the entirety thereof in the radial direction.

On the one side in the axial direction of the second adapter ring 134, an annular engagement groove 134a is formed so as to be recessed toward the other side in the axial direction. The engagement groove 134a is formed such that a center portion in the radial direction thereof is recessed toward the other side in the axial direction. The side surface 12b1 of the first seal member 12 is engaged with the engagement groove 134a. A side surface 134b on the other side in the axial direction of the second adapter ring 134 is formed flat over the entirety thereof in the radial direction. The end surface 4a1 of the pressing member 4 (cylindrical portion 4a) is in contact with the side surface 134b of the second adapter ring 134.

The elastic member 135 is composed of a compression coil spring, for example. The elastic member 135 is placed on the radially inner side with respect to the second seal member 14 and on the one side in the axial direction with respect to the first adapter ring 133. One axial end of the elastic member 135 is in contact with the step surface 2c of the seal box 2. Another axial end of the elastic member 135 is in contact with the side surface 133b of the first adapter ring 133. Accordingly, the elastic member 135 presses the first adapter ring 133 against the step surface 2c of the seal box 2 toward the other side in the axial direction by a biasing force thereof. The elastic member 135 is not limited to a compression coil spring and may be, for example, a disc spring or the like.

Due to the above configuration, the first adapter ring 133 is pressed toward the other side in the axial direction by the elastic member 135, and the second adapter ring 134 is pressed toward the one side in the axial direction by the tightening mechanism 3 (pressing member 4). Accordingly, the inner tube portion 12c and the outer tube portion 12d of the first seal member 12 are held in a state of being pushed and widened toward the radially inner side and the radially outer side, respectively, by the engagement portion 133a of the first adapter ring 133. In addition, the inner tube portion 12c and the outer tube portion 12d are also pressed toward the radially inner side and the radially outer side, respectively, by the pressure of the sealing target fluid flowing into the annular groove 12a from the one side in the axial direction.

By the inner tube portion 12c being pressed toward the radially inner side, the inner circumferential surface 12c1 of the first seal member 12 is brought into close contact with the outer circumferential surface 50a of the rotary shaft 50, whereby the first seal member 12 can inhibit the sealing target fluid from leaking from the radially inner side of the annular space S (rotary shaft 50 side) to the outside. In addition, by the outer tube portion 12d being pressed toward the radially outer side, the outer tube portion 12d of the first seal member 12 can be inhibited from shrinking radially inward at a low temperature.

The other components of the present embodiment are the same as those of the second embodiment, and thus are designated by the same reference signs, and the description thereof is omitted. The seal unit 11 of the third embodiment may have a plurality of first seal members 12 between the first adapter ring 133 and the second adapter ring 134.

In the seal structure 10 of the present embodiment as well, since the first seal member 12 made of a synthetic resin is provided on the radially outer side of the outer circumferential surface 50a of the rotary shaft 50, the sliding surface (inner circumferential surface 12c1), against the outer circumferential surface 50a of the rotary shaft 50, of the first seal member 12 is less likely to wear. Accordingly, contamination into the sealing target fluid in the fluid device can be suppressed. In addition, even when the seal structure 10 is used in a low-temperature environment (in particular, in an extremely low-temperature environment), the first seal member 12 and the second seal member 14 can be inhibited from shrinking in the radial direction. Furthermore, the inner circumferential surface 14a of the second seal member 14 can be brought into close contact with the outer circumferential surface 12d1 of the first seal member 12. Accordingly, the sealing performance of the seal structure 10 in a low-temperature environment can also be improved.

### Others

The embodiments disclosed herein are merely illustrative in all aspects and should not be recognized as being restrictive. The scope of the present invention is defined by the scope of the claims rather than the meaning described above, and is intended to include meaning equivalent to the scope of the claims and all modifications within the scope.

### LIST OF REFERENCE SIGNS

- 2d: circumferential surface (outer sealing target surface)
- 10: seal structure
- 11: seal unit
- 12: first seal member
- 12a: annular groove
- 13: shrinkage suppression part
- 14: second seal member
- 18: spacer
- 50a: outer circumferential surface (inner sealing target surface)
- 131: O-ring

## Claims

1. A seal structure for sealing between an inner sealing target surface and an outer sealing target surface facing each other in a radial direction, the seal structure comprising:
an annular first seal member provided on a radially outer side of the inner sealing target surface, having an annular groove that is open on one side in an axial direction, and made of a synthetic resin;
a shrinkage suppression part engaged with the annular groove of the first seal member and configured to suppress shrinkage of the first seal member in the radial direction at a low temperature; and
an annular second seal member interposed between the first seal member and the outer sealing target surface and made of a material that has a lower shrinkage rate at a low temperature than the first seal member and easily fits closely to the first seal member.

2. The seal structure according to claim 1,
wherein the shrinkage suppression part is composed of an O-ring that is fitted into the annular groove and is made of a metal.

3. The seal structure according to claim 1 or 2,
wherein the second seal member is made of expanded graphite, an expanded graphite yarn, or an expanded graphite packing.

4. The seal structure according to claim 1 or 2,
wherein a plurality of seal units each composed of a set of the first seal member, the second seal member, and the shrinkage suppression part are provided in the axial direction between the inner sealing target surface and the outer sealing target surface, and
the seal structure further comprises a spacer interposed between the second seal members of the seal units adjacent to each other in the axial direction.
